# FASCICULE DE BREVET EUROPEEN

(11) **EP 1 153 768 B1**
(45) Date de publication et mention de la délivrance du brevet: **17.12.2003**
(21) Numéro de dépôt: 01401019.3
(22) Date de dépôt: 20.04.2001
(51) Int. Cl.: B60B 27/00, B60T 1/06

(54) **Système de montage de roue sur un pont ou essieu de véhicule roulant**
Radaufhängung an Achsbrücke oder Achse für Motorfahrzeuge
Wheel mounting system on bridge or axle for motor vehicles

(30) Priorité: 11.05.2000 FR 0005985
(43) Date de publication de la demande: 14.11.2001
(73) Titulaire: Renault V.I., 69800 St Priest (FR)
(72) Inventeur: Seiler, Christian, 69100 Villeurbanne (FR)
(74) Mandataire: Palix, Stéphane

(56) Documents cités:
- EP-A- 0 489 233
- DE-A- 4 301 195
- US-A- 4 883 371
- US-A- 5 603 554
- US-A- 6 017 097

## Description

La présente invention concerne un système de montage de roue sur un pont ou essieu de véhicule roulant, tel que par exemple un camion ou une remorque. Elle peut s'appliquer au montage de roues motrices sur un pont moteur de camion, arrière ou avant, ou de roues libres en rotation pour des ponts seulement porteurs ou des essieux de remorques.

Les systèmes de montage de roues doivent assurer, de manière générale, une fonction essentielle de guidage en rotation et de portance de la charge du véhicule, assurée classiquement par des roulements à corps roulants et contacts obliques, notamment des roulements à rouleaux coniques, montés entre d'une part le moyeu rotatif sur lequel la roue est fixée et d'autre part une fusée d'essieu ou une trompette de pont.

Dans les ponts moteurs, ils doivent assurer une fonction complémentaire de transmission du couple moteur par l'intermédiaire d'un arbre de roue relié au moyeu pour l'entraîner en rotation.

Par ailleurs, le montage de roue participe aussi couramment à la fonction freinage, dans la mesure où les organes tournants des freins, tels que des disques de frein, sont fixés directement ou indirectement sur le moyeu.

Un montage de roue classique et bien connu consiste à utiliser deux roulements à rouleaux coniques séparés montés d'une part à l'intérieur du moyeu et d'autre part sur des portées de l'extrémité de la trompette par exemple. Les bagues extérieures des roulements, couramment appelées « cuvettes », sont montées dans des logements adaptés du moyeu, de chaque côté de celui-ci, en butée axiale contre des épaulements respectifs des dits logements. Les bagues intérieures coniques, couramment appelées « cônes », sont montées sur la trompette. La bague du roulement interne, situé vers le milieu du pont, est en butée axiale, directe ou par l'intermédiaire d'une bague rapportée de portée de joint d'étanchéité, contre un épaulement de la dite trompette. La bague du roulement externe est maintenue sur l'extrémité de la trompette par un écrou avec un arrêtoir. Cet écrou permet par ailleurs de régler la précharge des roulements en exerçant sur ceux ci un effort axial.

Dans ce type de montage, les bagues intérieures des roulements sont fixes, et les bagues extérieures tournent avec le moyeu, les ensembles de rouleaux coniques étant interposés entre les " cônes " et les " cuvettes " respectifs de chaque roulement.

Par ailleurs, lorsqu'un tel montage est utilisé pour un pont moteur, l'arbre de roue passe librement dans un passage axial de la trompette pour se raccorder par une extrémité interne sur le mécanisme d'engrenage du pont. Du côté externe, l'arbre de roue comporte un flasque-bride lié en rotation au moyeu, par exemple par une pluralité de vis réparties circonférentiellement sur le dit flasque. Le guidage en rotation de l'arbre de roue est donc assuré, du côté extérieur, indirectement, par l'intermédiaire du moyeu.

Les montages du type pré-mentionné présentent plusieurs inconvénients.

En premier lieu, l'ajustement correct de la précharge, par réglage au moyen de l'écrou de maintien de la bague intérieure du roulement externe, est mal assuré, par le fait même de la possibilité de faire varier de manière importante cette précharge par serrage de l'écrou, alors que cette précharge est un facteur important pour la durée de vie des roulements.

Dans ces montages également, la lubrification des roulements est couramment assurée par l'huile du pont. Il en résulte que des particules métalliques provenant des mécanismes d'engrenage du pont et véhiculées par la dite huile, peuvent arriver aux roulements et accélérer leur usure ou même les dégrader.

Les disques de freins sont classiquement montés sur le moyeu, mais déportés en général vers le milieu du pont, pour trouver place à l'intérieur de la jante de roue qui entoure l'ensemble du système de montage de roue. Les disques sont ainsi couramment fixés sur le porte-jante sur lequel la jante est montée, mais du côté interne du dit porte-jante, ce qui conduit à devoir déposer le moyeu, et donc démonter le montage de roulements, pour accéder au disque de frein et le remplacer le cas échéant. Une telle opération est donc longue et coûteuse. De plus le remontage des roulements est délicat car nécessitant de réaliser à nouveau un ajustement précis de la précharge du roulement.

Egalement, des problèmes d'étanchéité peuvent se poser car celle-ci est couramment assurée par un joint monté sur le moyeu, à côté de la cuvette du roulement interne, et portant sur une bague rapportée sur la trompette. Lors d'une dépose ou repose du moyeu, effectuée par exemple pour procéder à un remplacement du disque, le centrage du moyeu est mal assuré tant que les roulements ne sont pas en place définitivement. Il peut donc en résulter une détérioration du joint, nuisible à terme, ou même l'introduction d'impuretés dans le roulement lors du remontage.

On notera que le type de montage qui vient d'être décrit est également utilisé pour des montages de roues sur des ponts avants directeurs. Les roulements sont alors portés par une fusée de moyeu au lieu de la trompette de pont, et l'arbre de roue est une extrémité d'une transmission à joint homocinétique, le flasque-bride d'arbre de roue étant alors rapporté sur l'extrémité du dit arbre pour en permettre le montage après mise en place de la transmission homocinétique. Les autres caractéristiques sont similaires à celles des montages de roues sur ponts arrières, et ils présentent le même type d'inconvénients.

On connaît aussi d'autres systèmes de montage de roues utilisant, à la place des deux roulements à rouleaux coniques décrits ci-dessus, un seul roulement à deux rangées de rouleaux, encore appelé " roulement cartouche ". Typiquement ces roulements comportent une seule bague extérieure portant deux chemins de roulement coniques. Les chemins de roulement intérieurs sont portés par des bagues intérieures, ou " cônes ", séparées, mais qui sont amenées en contact et maintenus en butée axiale l'une contre l'autre par serrage axial au moyen d'un écrou par exemple.

Dans les montages utilisant ce type de roulement compact, la bague extérieure est montée dans un alésage épaulé du moyeu, où elle est par ailleurs maintenue axialement par exemple par un anneau d'arrêt. Les bagues intérieures sont fixes, emmanchées sur une portée d'extrémité de la trompette, également épaulée, et maintenues axialement sur celle-ci par un écrou. Cet écrou sert de butée mais n'est pas utilisé pour ajuster la précharge, celle-ci étant prédéterminée par la géométrie du roulement, les deux bagues intérieures étant en butée l'une sur l'autre.

Ce type de montage supprime donc les problèmes de réglage de la précharge. Egalement, les problèmes de lubrification des montages pré-mentionnés sont supprimés ou au moins fortement réduits puisque le roulement est lubrifié par graissage indépendant et pourvu de joints spécifiques, liés au roulement, et situés entre d'une part la bague extérieure et d'autre part chacune des bagues intérieures. Les éventuelles opérations de dépose et repose conduisent à manipuler l'ensemble du roulement, sans risque de détérioration de la lèvre des joints.

On connaît aussi, notamment pour des montages de roues avant directrices et non motrices, ou encore pour des montages de roues de remorques, l'utilisation de roulements à deux rangées de rouleaux, comme indiqué ci dessus, mais où, au lieu de monter la bague extérieure dans un alésage du moyeu, c'est cette bague qui constitue elle-même le moyeu, en comportant une partie d'extrémité axiale sous forme d'une bride sur laquelle le disque de frein et un porte-jante sont centrés et fixés directement par des vis. Les bagues intérieures sont maintenues, comme indiqué précédemment, sur une queue de fusée de la fusée de roue, par un écrou. Une coupelle, emmanchée dans le trou central du disque de frein ou du porte-jante assure la protection du roulement et l'étanchéité du côté externe, un joint de roulement entre les bagues intérieures et extérieures assurant l'étanchéité du côté interne.

Le document EP-A-489 233 divulgue un système selon le préambule de la revendication 1, le disque de frein étant fixé directement sur le moyeu.

La présente invention a pour but de proposer un nouveau système de montage de roues, utilisant un même concept de montage et des éléments similaires que ce soit pour le montage d'une roue de pont moteur ou de pont seulement porteur, ou encore de pont avant. Elle vise en particulier à résoudre les problèmes précédemment mentionnés, notamment en permettant un accès facile aux disques de freins sans nécessité d'intervenir sur les roulements et en limitant les opérations de démontage et remontage. Elle vise aussi, en évitant toute intervention sur les roulements lors d'interventions sur les disques de freins, à supprimer tout risque de modification de la précharge des roulements, et tout risque de détérioration de l'étanchéité ou d'introduction d'impuretés dans les roulements.

Avec ces objectifs en vue, l'invention a pour objet un système de montage de roue sur un pont ou essieu de véhicule roulant selon la revendication 1.

A cette fin, préférentiellement, le moyeu comporte, vers son extrémité externe, une collerette sur laquelle est fixé un porte-jante, et, par ailleurs, les bagues intérieures sont maintenues sur le moyeu en butée contre un épaulement situé à proximité de la dite collerette par un écrou vissé sur le moyeu du côté interne.

Le porte-jante est lié en rotation à la dite collerette et fixé sur la dite collerette par des vis. Le porte-jante étant fixé sur la collerette par l'extérieur, il est particulièrement aisé de le démonter, sans intervenir sur le roulement.

Ceci s'avère particulièrement intéressant lorsqu'un disque de frein est fixé sur une portée annulaire périphérique du porte-jante, le disque de frein comportant un orifice central de diamètre supérieur au diamètre externe de la collerette. Il est alors possible de remplacer le disque de frein sans démontage du moyeu ni du roulement, en déposant seulement le porte-jante.

Dans le cas d'une application de l'invention à un pont arrière ou à un essieu de remorque, l'élément de support fixe est formé par une extrémité d'un carter de pont ou d'un essieu, pourvue d'une contre-bride annulaire et d'une portée de centrage, et la bride de la bague extérieure du roulement est centrée sur la dite portée de centrage, et serrée contre la contre-bride par des vis traversant la contre-bride et vissées dans la bride de bague extérieure.

Lorsque le montage selon l'invention est utilisé pour un pont moteur, le moyeu est préférentiellement constitué par une zone de portée cylindrique d'extrémité d'un arbre de roue, qui assure alors à la fois les fonctions de guidage et de portance, et celle de transmission du couple. Autrement dit, et contrairement aux divers systèmes d'art antérieur, l'arbre de roue et le moyeu sont formés d'une seule et même pièce.

Lorsque le système selon l'invention est utilisé pour des roues directrices, l'élément de support fixe est formé par une chape de pivot de roue directrice, pivotante par rapport à un carter d'essieu avant.

Une cloche portant un disque de frein peut alors être fixée sur le porte-jante, du côté de la chape, et autour du roulement, et dans cette application également, le disque de frein est accessible en déposant seulement le porte-jante, sans besoin de démonter le roulement.

Lorsque le système de montage de roue est utilisé pour un pont avant moteur, le moyeu est constitué par un arbre d'entraînement comportant un épaulement de butée pour recevoir en butée une première bague intérieure du roulement, l'extrémité de l'arbre d'entraînement portant le porte-jante lié en rotation avec le dit arbre et appliqué en butée axiale contre la deuxième bague intérieure par un écrou.

Comme on l'aura déjà compris et comme cela ressortira encore mieux de la description des exemples qui va suivre, le système selon l'invention présente l'intérêt particulier de constituer un montage de roue générique, c'est à dire reprenant des éléments structurels semblables dans les diverses applications, que ce soit sur un pont arrière moteur, ou sur un essieu de remorque, ou encore un essieu directeur ou un pont avant, directeur et moteur.

Parmi les autres avantages du système selon l'invention, on notera aussi qu'il permet de fixer un capteur de rotation, pour des système d'anti-blocage des roues, directement sur la bague extérieure fixe du roulement, ce qui permet une grande précision et une grande stabilité du signal. De plus, lors d'un changement de disque, le capteur n'a plus besoin d'être démonté puisqu'il n'y a plus besoin d'intervenir sur le roulement, ce qui supprime la nécessité rencontrée auparavant d'effectuer un contrôle de signal du capteur après remontage du disque.

D'autres caractéristiques et avantages apparaîtront dans la description qui va être faite de trois applications du système de montage de roues conforme à l'invention.

On se reportera aux dessins annexés dans lesquels :
- la figure 1 est une vue en coupe du montage de roue utilisé sur un pont arrière,
- la figure 2 est une vue en coupe du montage de roue utilisé sur un essieu de remorque,
- la figure 3 est une vue en coupe du montage de roue utilisé sur un pont avant directeur,
- la figure 4 est une vue en coupe d'une variante de réalisation du montage de roue utilisé sur un pont arrière.

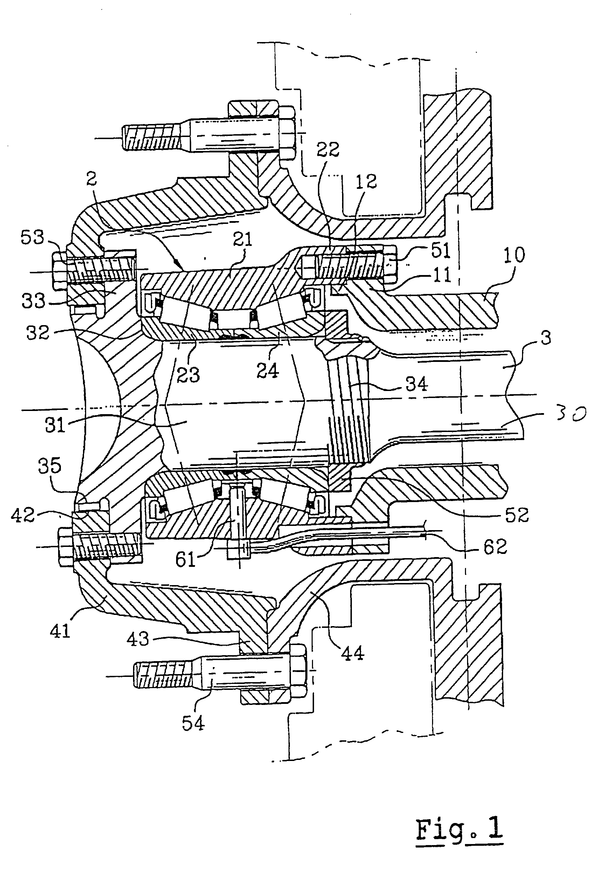

Sur le dessin de la figure 1, on n'a représenté que l'extrémité ou du carter de pont 10, qui est conformée de manière à constituer une contre-bride 11 sur laquelle est réalisée une portée de centrage 12.

Le roulement 2 comporte une bague extérieure 21 pourvue d'une bride 22 qui est montée centrée sur la portée 12. La bride 22 du roulement est appliquée en appui axial par sa face frontale contre la face de la contre-bride 11. Elle y est maintenue par des vis 51 passant dans des alésages de la contre-bride 11, vissées dans des trous taraudés de la bride de roulement 22, les têtes de ces vis étant accessibles du côté de la bride situé vers le centre du pont.

Le roulement 2 comporte également deux bagues intérieures 23, 24, montées sur une portée 31 de l'arbre de roue 3 dont la partie interne 30 est reliée de manière connue en soi sur les engrenages du pont, non représentés. La portée 31 de l'arbre de roue constitue donc directement le moyeu. La bague intérieure 23 est en butée contre un épaulement 32 de l'arbre de roue, et un écrou 52 vissé sur une partie filetée 34 de la portée 31 maintient axialement la deuxième bague intérieure 24, en appui contre la première bague intérieure 23. L'écrou 52 est freiné sur l'arbre de roue, de manière connue en soi.

L'extrémité externe de l'arbre de roue comporte une collerette sur laquelle est fixé le porte-jante 41. La collerette comporte d'une part une bride 33 sur laquelle le porte-jante est maintenu en butée dans la direction axiale par des vis 53, et d'autre part une couronne dentée 35, en débord vers l'extérieur par rapport à la bride 33, dont la denture coopère avec une denture correspondante 42 réalisée dans l'alésage du porte-jante, pour assurer la liaison en rotation et la transmission du couple moteur entre l'arbre de roue 3 et le porte-jante 41.

Le porte-jante 41 a une forme de cloche qui vient en recouvrement autour du roulement 2 et se termine par une bride 43 sur laquelle est fixée le disque de frein 44 par des boulons 54 servant également à la fixation de la jante, non représentée.

Comme on peut le voir sur le dessin, il suffit de dévisser les vis 53 de fixation du porte-jante pour pouvoir déposer l'ensemble porte-jante et disque de frein en le faisant glisser axialement autour du roulement, permettant ainsi de remplacer le disque sans aucune intervention sur les roulements.

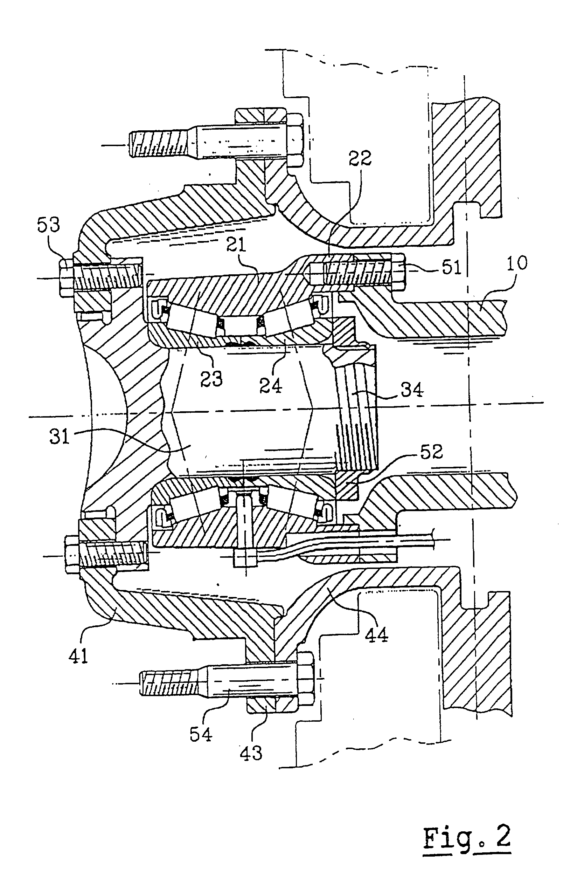

On notera qu'un capteur de rotation 61 peut être monté directement sur la bague extérieure 21 du roulement, et relié par un câble 62 passant dans un passage ménagé à travers la bride 22 de bague extérieure et la contre bride 11 du carter de pont. Le capteur est protégé à l'intérieur du porte-jante, et ne gène nullement lors du démontage du porte-jante. Le montage représenté figure 2 est un montage de roue adapté pour un pont non moteur ou un essieu de remorque.

Ce montage est similaire à celui de la figure 1, à l'exception du fait que le moyeu 31 est dans ce cas un simple moyeu libre en rotation, c'est à dire que, par rapport au montage de la figure 1, seule la partie 30 de l'arbre de roue reliant le moyeu aux engrenages du pont est supprimée.

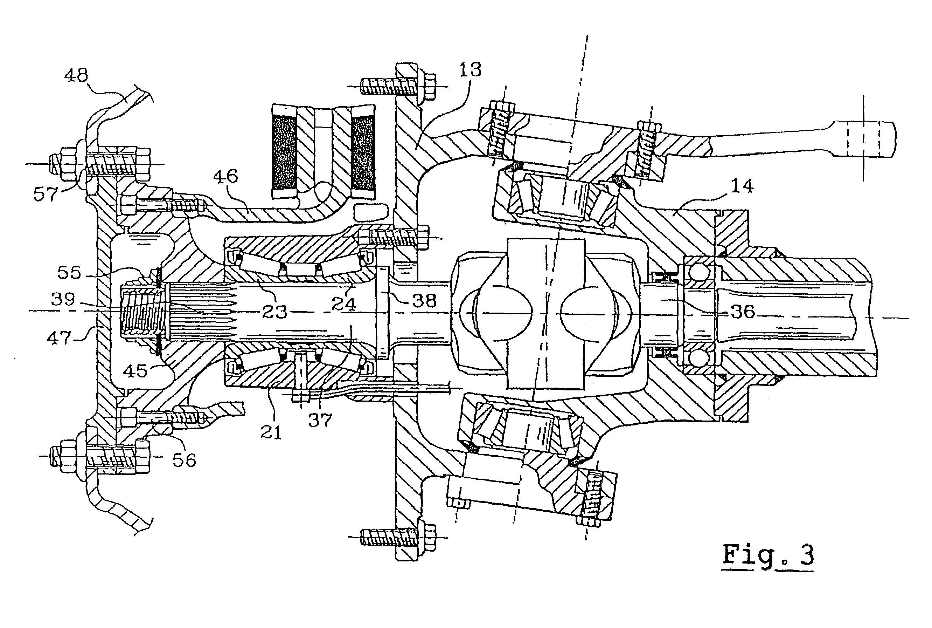

La figure 3 montre une application à un pont avant moteur. Dans ce montage, la cage extérieure 21 du roulement est fixée sur une chape de pivot 13, qui est montée pivotante sur une chape d'extrémité 14 de carter de pont avant, de manière connue en soi.

La transmission à cardan ou joint homocinétique 36 se termine par un arbre d'entraînement 37 constituant le moyeu sur lequel sont montées les bagues intérieures 23, 24 du roulement. La bague intérieure 24 est en butée axiale contre un épaulement 38 de l'arbre. Le porte-jante 45 est monté sur l'extrémité de l'arbre 37, immobilisé en rotation par des cannelures 39 et maintenu axialement en butée contre la bague intérieure 23 par un écrou 55 freiné.

Le disque de frein 46 est fixé sur le porte jante 45 par des vis 56. Une plaque 47 de fermeture et de centrage est montée centrée sur le porte-jante 45, pour recouvrir et protéger l'extrémité de l'arbre 37 et l'écrou 55. Des boulons de roues 57 maintiennent l'assemblage de la dite plaque 47 et de la jante 48 sur le porte jante 45.

Pour accéder au disque de frein, on dépose la jante et la plaque 47 pour avoir accès à l'écrou 55. Puis on enlève cet écrou ce qui permet de retirer le porte jante et le disque de frein qui peut alors être remplacé en dévissant les vis 56.

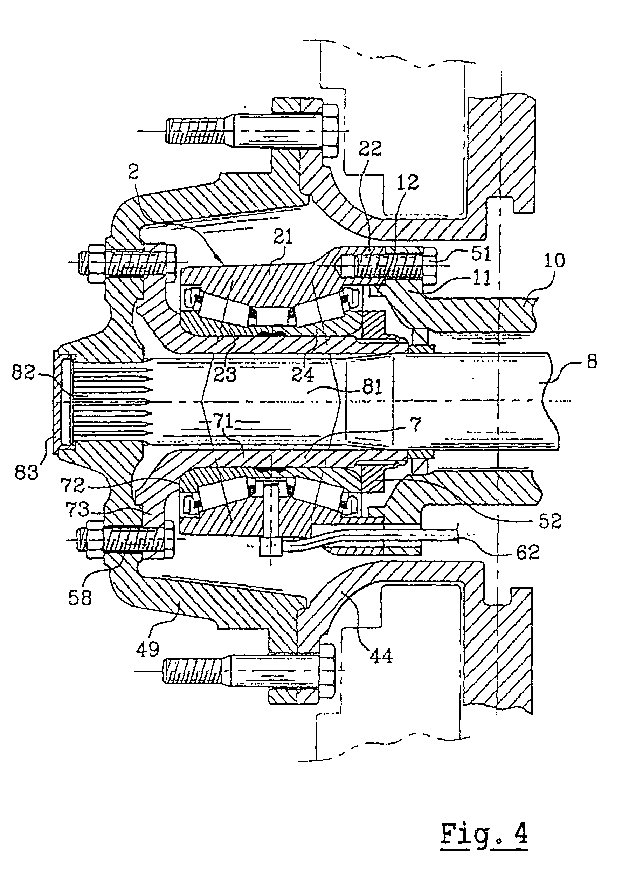

La variante représentée figure 4 s'applique au montage de roue sur un pont arrière, comme la réalisation de la figure 1, la fixation de la bague extérieure 21 du roulement 2 sur l'extrémité du carter de pont 10 étant réalisée de manière identique. Dans cette variante, le moyeu 7 n'est plus constitué par une portée d'extrémité de l'arbre de roue 8, mais par une pièce tubulaire supplémentaire, comportant une portée cylindrique 71 sur laquelle sont montées les bagues intérieures 23, 24 du roulement, maintenues en butée axiale contre un épaulement 72 du dit moyeu 7 par un écrou 52 freiné.

Le moyeu 7 comporte par ailleurs une collerette 73 sur laquelle le porte-jante 49 est centré et fixé par des boulons 58. La partie la plus externe 81 de l'arbre de roue passe avec un jeu diamétral dans l'alésage du moyeu tubulaire 7 et a une extrémité cannelée 82 emmanchée dans un trou cannelé correspondant du porte-jante 49, pour assurer la transmission du couple. Un bouchon 83 est placé dans le trou du porte-jante pour protéger l'extrémité de l'arbre de roue.

Le disque de frein 44 et la jante sont montés sur le porte-jante comme dans le montage de la figure 1.

L'invention n'est pas limitée aux modes de réalisation qui ont été décrits ci-dessus uniquement à titre d'exemple. On pourra en particulier modifier les modes de réalisation du moyeu et les liaisons de celui-ci avec le porte-jante sans sortir du cadre de l'invention, dés lors que la bague extérieure du roulement est montée conformément à l'invention sur un support fixe d'extrémité d'essieu, de carter de pont, chape de pivot, etc.

## Revendications

1. Système de montage de roue sur un pont ou essieu de véhicule roulant, comportant
- un élément de support (11, 13) fixe en rotation et lié au dit pont ou essieu,
- un moyeu (31, 37, 7) rotatif auquel est liée la roue,
- un roulement (2) comportant deux rangées de corps roulants qui sont placées entre une bague extérieure (21) monobloc et respectivement deux bagues intérieures (23, 24) maintenues axialement l'une par rapport à l'autre, le roulement (2) étant monté entre le dit élément de support et le dit moyeu, la bague extérieure (21) du roulement étant réalisée d'une pièce avec une bride de fixation (22), et fixe en rotation, solidarisée directement par sa bride (22) sur le dit élément de support (11 ; 13) sur lequel elle est centrée et maintenue en appui selon la direction axiale, et les bagues intérieures étant montées sur le moyeu, **caractérisé en ce qu'**un disque de frein (44) est fixé sur une portée annulaire périphérique (43) d'un porte-jante (41) fixé sur une extrémité externe du moyeu.

2. Système de montage de roue selon la revendication 1, **caractérisé en ce que** le moyeu (31 ; 7) comporte, vers son extrémité externe, une collerette (33, 32 ; 73) sur laquelle est fixé le porte-jante (41 ; 49).

3. Système de montage de roue selon la revendication 2, **caractérisé en ce que** les bagues intérieures (23, 24) sont maintenues sur le moyeu (31 ; 7) en butée contre un épaulement (32 ; 72) situé à proximité de la dite collerette par un écrou (52) vissé sur le moyeu du côté interne.

4. Système de montage de roue selon l'une quelconque des revendications 2 ou 3, **caractérisé en ce qu'**il est utilisé pour un pont moteur, le moyeu (31) étant constitué par une zone de portée cylindrique d'extrémité d'un arbre de roue (3).

5. Système de montage de roue selon la revendication 2, **caractérisé en ce que** le porte-jante (41) est lié en rotation à la dite collerette (32, 33) et fixé sur la dite collerette par des vis (53).

6. Système de montage de roue selon la revendication 2, **caractérisé en ce que** le disque de frein comporte un orifice central de diamètre supérieur au diamètre externe de la collerette (33).

7. Système de montage de roue selon la revendication 1, **caractérisé en ce que** l'élément de support fixe est formé par une extrémité d'un carter (10) de pont ou d'un essieu, pourvue d'une contre-bride (11) annulaire et d'une portée de centrage (12), et la bride (22) de la bague extérieure (21) du roulement est centrée sur la dite portée de centrage, et serrée contre la contre-bride par des vis (51) traversant la contre-bride et vissées dans la bride de bague extérieure.

8. Système de montage de roue selon la revendication 1, **caractérisé en ce qu'**il est utilisé pour des roues directrices et **en ce que** l'élément de support fixe est formé par une chape (13) pivotante par rapport à un carter d'essieu avant.

9. Système de montage de roue selon la revendication 8, **caractérisé en ce qu'**il est utilisé pour un pont avant moteur, le moyeu étant constitué par un arbre d'entraînement (37) comportant un épaulement de butée (38) pour recevoir en butée une première bague intérieure (24) du roulement, l'extrémité de l'arbre d'entraînement portant un porte-jante (45) lié en rotation avec le dit arbre et appliqué en butée axiale contre la deuxième bague intérieure (23) par un écrou (55).

10. Système de montage de roue selon la revendication 9, **caractérisé en ce que** le porte-jante (45) est lié en rotation avec l'arbre d'entraînement par des cannelures (39).

11. Système de montage de roue selon la revendication 9, **caractérisé en ce que** une cloche portant un disque de frein (46) est fixée sur le porte-jante, du côté de la chape, et autour du roulement.

12. Système de montage de roue selon la revendication 2, **caractérisé en ce qu'**il est utilisé pour un pont moteur, le moyeu (7) étant constitué par une pièce tubulaire sur laquelle est fixée le porte-jante (49), la partie externe (81) de l'arbre de roue (8) passant dans l'alésage du moyeu tubulaire et comportant des cannelures (82) sur lesquelles le porte-jante est emmanché.

## Claims

1. System for mounting a wheel on an axle of a rolling vehicle, comprising
- a support element (11, 13) fixed in terms of rotation and connected to the said axle,
- a rotary hub (31, 37, 7) to which the wheel is connected,
- a rolling bearing (2) comprising two rows of rolling bodies which are placed between a monoblock outer race (21) and two respective inner races (23, 24) held axially with respect to one another the bearing (2) being mounted between the said support element and the said hub, the outer race (21) of the bearing being made as one piece with a fixing flange (22) and fixed in terms of rotation, secured directly by its flange (22) to the said support element (11; 13) on which it is centred and against which it is pressed in the axial direction, and the inner races being mounted on the hub, **characterized in that** a brake disc (44) is fixed on a peripheral annular land (43) of a wheel centre (41) fixed on an outer end of the hub.

2. Wheel mounting system according to Claim 1, **characterized in that** the hub (31; 7) comprises, towards its outer end, an annular flange (33, 32; 73) to which the wheel centre (41; 49) is fixed.

3. Wheel mounting system according to Claim 2, **characterized in that** the inner races (23, 24) are held on the hub (31; 7) in abutment against a shoulder (32; 72) situated near the said annular flange by a nut (52) screwed onto the hub on the inside.

4. Wheel mounting system according to either one of Claims 2 and 3, **characterized in that** it is used for a powered axle, the hub (31) consisting of a cylindrical land region at the end of an axle shaft (3).

5. Wheel mounting system according to Claim 2, **characterized in that** the wheel centre (41) is connected in terms of rotation to the said annular flange (32, 33) and fixed to the said annular flange by screws (53).

6. Wheel mounting system according to Claim 2, **characterized in that** the brake disc comprises a central orifice of a diameter greater than the outside diameter of the annular flange (33).

7. Wheel mounting system according to Claim 1, **characterized in that** the fixed support element is formed of one end of an axle housing (10) provided with an annular mating flange (11) and with a centring land (12), and the flange (22) of the outer race (21) of the rolling bearing is centred on the said centring land and clamped against the mating flange by screws (51) passing through the mating flange and screwed into the outer race flange.

8. Wheel mounting system according to Claim 1, **characterized in that** it is used for steered wheels and **in that** the fixed support element is formed of a clevis (13) pivoting with respect to a front axle housing.

9. Wheel mounting system according to Claim 8, **characterized in that** it is used for a powered front axle, the hub consisting of a drive shaft (37) comprising a thrust shoulder (38) to receive, in abutment, a first inner race (24) of the rolling bearing, the end of the drive shaft carrying a wheel centre (45) connected in terms of rotation to the said shaft and pressed into axial abutment against the second inner race (23) by a nut (55).

10. Wheel mounting system according to Claim 9, **characterized in that** the wheel centre (45) is connected in terms of rotation to the drive shaft by splines (39).

11. Wheel mounting system according to Claim 9, **characterized in that** a bell housing carrying a brake disc (46) is fixed to the wheel centre, on the same side as the clevis, and around the rolling bearing.

12. Wheel mounting system according to Claim 2, **characterized in that** it is used for a powered axle, the hub (7) consisting of a tubular piece to which the wheel centre (49) is fixed, the outer part (81) of the axle shaft (8) passing into the bore of the tubular hub and having splines (82) onto which the wheel centre is fitted.

## Patentansprüche

1. System zur Radmontage an einer Achsbrücke oder Achse eines Straßenfahrzeuges, umfassend
- ein Halteelement (11, 13), das drehfest ist und mit der Achsbrücke oder Achse verbunden ist,
- eine drehbare Nabe (31, 37, 7), mit der das Rad verbunden ist,
- ein Lager (2) mit zwei Reihen von rollenden Körpern, die zwischen einem aus einem Block bestehenden Außenring (21) beziehungsweise zwei Innenringen (23, 24) angeordnet sind, die axial zueinander gehalten werden, wobei das Lager (2) zwischen dem Halteelement und der Nabe montiert ist, der Außenring (21) des Lagers aus einem Teil und drehfest mit einem Befestigungsflansch (22) gebildet ist und mit seinem Flansch (22) direkt an dem Halteelement (11, 13) befestigt ist, an dem es zentriert ist und an das es in axialer Richtung gepresst ist, und wobei die Innenringe an der Nabe montiert sind,
**dadurch gekennzeichnet, dass** eine Bremsscheibe (44) an einer peripheren ringförmigen Auflagefläche (43) eines Felgenhalters (41) befestigt ist, der an einem äußeren Ende der Nabe befestigt ist.

2. Radmontagesystem nach Anspruch 1, **dadurch gekennzeichnet, dass** die Nabe (31; 7) zu ihrem äußeren Ende hin einen Kragen (33, 32; 73) umfasst, an dem der Felgenhalter (41; 49) befestigt ist.

3. Radmontagesystem nach Anspruch 2, **dadurch gekennzeichnet, dass** die Innenringe (23, 24) an der Nabe (31; 7) gegen eine Schulter (32; 72), die sich in der Nähe des Kragens befindet, durch eine Mutter (52) in Anschlag gehalten werden, die von der Innenseite an die Nabe geschraubt ist.

4. Radmontagsystem nach einem der Ansprüche 2 oder 3, **dadurch gekennzeichnet, dass** es für eine Antriebsachse verwendet wird, wobei die Nabe (31) durch einen zylindrischen Auflagebereich am Ende einer Achswelle (3) gebildet wird.

5. Radmontagesystem nach Anspruch 2, **dadurch gekennzeichnet, dass** der Felgenhalter (41) drehfest mit dem Kragen (32, 33) verbunden und an dem Kragen durch Schrauben (53) befestigt ist.

6. Radmontagesystem nach Anspruch 2, **dadurch gekennzeichnet, dass** die Bremsscheibe eine mittige Öffnung aufweist, deren Durchmesser größer ist als der Außendurchmesser des Kragens (33).

7. Radmontagesystem nach Anspruch 1, **dadurch gekennzeichnet**, dassdas fixe Halteelement durch ein Ende eines Gehäuses (10) einer Achsbrücke oder Achse gebildet wird, das mit einem ringförmigen Gegenflansch (11) und einer Auflagefläche zum Zentrieren (12) versehen ist, und dass der Flansch (22) des Außenrings (21) des Lagers auf der Auflagefläche zum Zentrieren zentriert ist und durch Schrauben (51), die den Gegenflansch durchqueren und in den Flansch des Außenrings geschraubt sind, gegen den Gegenflansch gepresst wird.

8. Radmontagesystem nach Anspruch 1, **dadurch gekennzeichnet, dass** es für gelenkte Räder verwendet wird und dass das fixe Halteelement durch eine Haube (13) gebildet wird, die in Bezug auf ein Vorderachsgehäuse schwenkbar ist.

9. Radmontagesystem nach Anspruch 8, **dadurch gekennzeichnet, dass** es für eine vordere Antriebsachse verwendet wird, wobei die Nabe durch eine Antriebswelle (37) gebildet wird, die eine Anschlagschulter (38) umfasst, um einen ersten Innenring (24) des Lagers im Anschlag aufzunehmen, wobei das Ende der Antriebswelle einen Felgenhalter (45) trägt, der drehfest mit der Welle verbunden ist und durch eine Mutter (55) im axialen Anschlag gegen den zweiten Innenring (23) gepresst wird.

10. Radmontagesystem nach Anspruch 9, **dadurch gekennzeichnet, dass** der Felgenhalter (45) durch Rillen (39) drehfest mit der Antriebswelle verbunden ist.

11. Radmontagesystem nach Anspruch 9, **dadurch gekennzeichnet, dass** eine Glocke, die eine Bremsscheibe (46) trägt, am Felgenhalter an der Seite der Haube und um das Lager herum befestigt ist.

12. Radmontagesystem nach Anspruch 2, **dadurch gekennzeichnet, dass** es für eine Antriebsachse verwendet wird, wobei die Nabe (7) durch ein rohrförmiges Teil gebildet ist, an dem der Felgenhalter (49) befestigt ist, wobei der äußere Teil (81) der Achswelle (8) in der Bohrung der rohrförmigen Nabe verläuft und Rillen (82) aufweist, auf die der Felgenhalter geschoben wird.
